Europäisches Patentamt

European Patent Office

Office européen des brevets

(19)

(11) Publication number: **0 108 727**
**A1**

(12) # EUROPEAN PATENT APPLICATION

(21) Application number: **83830190.1**

(51) Int. Cl.³: **A 01 B 35/18**

(22) Date of filing: **03.10.83**

(30) Priority: **11.10.82 IT 5377582 U**

(43) Date of publication of application:
**16.05.84 Bulletin 84/20**

(84) Designated Contracting States:
**AT BE DE FR GB IT NL**

(71) Applicant: **SACEF dei F.lli AVIGNONE S.n.c.**
**Via Cigliano 61**
**I-10030 Torre Balfredo d'Ivrea (Torino)(IT)**

(72) Inventor: **Avignone, Alessio**
**Strada Provinciale Ivrea-Cigliano 4**
**I-10010 Albiano d'Ivrea (Torino)(IT)**

(74) Representative: **Buzzi, Franco et al,**
**c/o Jacobacci-Casetta & Perani S.p.A. Via Alfieri, 17**
**I-10121 Torino(IT)**

(54) Composite harrow with vibratory tines and breaking rollers.

(57) Composite harrow comprising a frame (12) carrying at its front end a plurality of flexible vibratory tines (20) and at its rear end breaking rollers comprising a plurality of front helical cage rollers (22), a plurality of intermediate helical cage rollers (24) and a rear roller (28) having rigid teeth (32) disposed in helical configurations.

The front and intermediate breaking rollers (22, 24) and the rear roller (28) are operable and adjustable independently.

The frame (12) has on respective opposite sides (14*b* and 14*c*) thereof, a carriage (40) and a tow bar (46) movable between a raised position and a lowered position for the drawing of the harrow by a tractor (T).

EP 0 108 727 A1

./...

FIG. 3

Composite harrow with vibratory tines and breaking rollers

The present invention relates to a composite harrow of the type comprising a frame the front part of which carries a plurality of flexible vibratory tines formed by metal blades having a curved resilient part for connection to the frame, the tines being located in parallel arrays, and the rear part of the frame carrying breaking rollers arranged parallel to the arrays of vibratory tines, in which the front part of the frame has a device for attachment to a tractor for effecting the working movement of the harrow.

The object of the present invention is to provide a harrow of the type specified above the shape of which is such as to achieve simultaneously, compared with conventional harrows of the same type, both a greater functional efficiency during use, through a better quality and higher working capacity together with lower operating cost, and a greater facility for drawing by a tractor during transfers towards and away from the place of working.

The main characteristic of the composite harrow according to the invention lies in the fact that the breaking rollers comprise a plurality of front helical cage rollers (22) a plurality of intermediate helical cage rollers (24) and a rear roller (28) having rigid teeth (32) arranged in helical configurations.

This characteristic results in an improvement in the preparation of the ground in use of the harrow, rendering it perfectly flat and compacted and thus ensuring by definition more efficient sowing.

The front and intermediate breaking rollers and the rear roller are independent of each other and are conveniently driven and adjustable independently, which affords a further improvement in the preparation of the surface of the ground during use of the harrow.

Preferably the rear roller is carried by a rear part of the frame articulated to the front part thereof about an axis parallel to the rear roller, and actuator means are provided for effecting displacement of this rear frame part between a lowered working position of the rear roller and a raised transport position of the harrow.

This characteristic considerably facilitates transport of the harrow during transfer by means of a tractor towards and away from the place of work.

According to a further aspect of the invention, the frame has a carriage on one of its sides and a tow bar for hitching to a towing device of a tractor on the opposite side, the carriage and the tow bar being rotatable about respective axes perpendicular to the arrays of vibratory tines, and actuator means are provided for effecting the displacement of the carriage and of the tow bar about the respective axes between a raised working position of the harrow and a lowered transport position of the harrow.

By virtue of this characteristic, the harrow according to the invention may be drawn in a condition in which it is rotated through $90^{\circ}$ relative to its working position, and in which it has smaller lateral bulk, with evident advantages from the point of view of the facility and safety of transport during transfers towards and away from the place of work.

According to a further characteristic of the invention, the vibratory tines of each array which in use of the harrow are located in alignment with the wheels of the tractor are adjustable in height so as to project downwardly further than the remaining vibratory tines

This characteristic allows any tracks left by the tractor to be obliterated in depth in use of the harrow.

Further characteristics and advantages of the invention will become evident in the course of the detailed description which follows, with reference to the appended drawings provided purely by way of nonlimiting example, in which:

Figure 1 is a schematic side elevational view of a harrow according to the invention in a condition of transfer being drawn by a tractor,

Figure 2 is a view similar to Figure 1 illustrating the harrow according to the invention in the working condition,

Figure 3 is a perspective view on an enlarged scale of the harrow in the condition of Figure 1,

Figure 4 is a partial perspective view on an enlarged scale of a detail of Figure 3,

Figure 5 is a front elevational view of Figure 3, and

Figure 6 is a side elevational view illustrating the harrow during movement between the working condition of

- 4 -

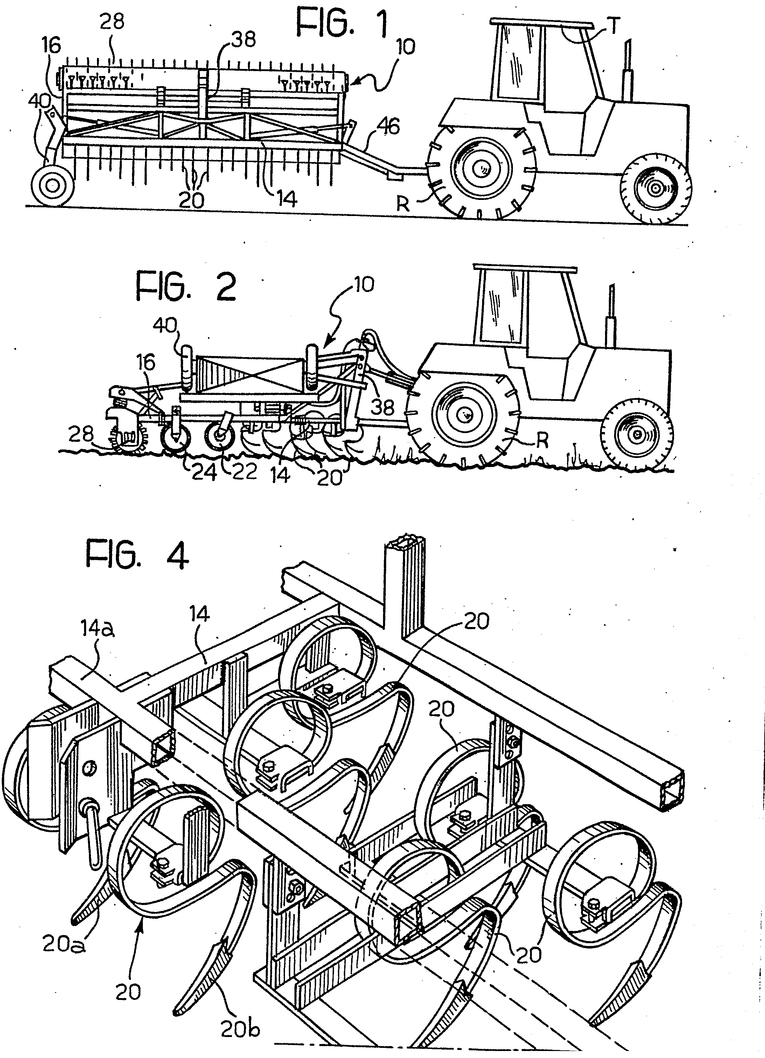

Figure 2 and the transfer condition of Figure 1.

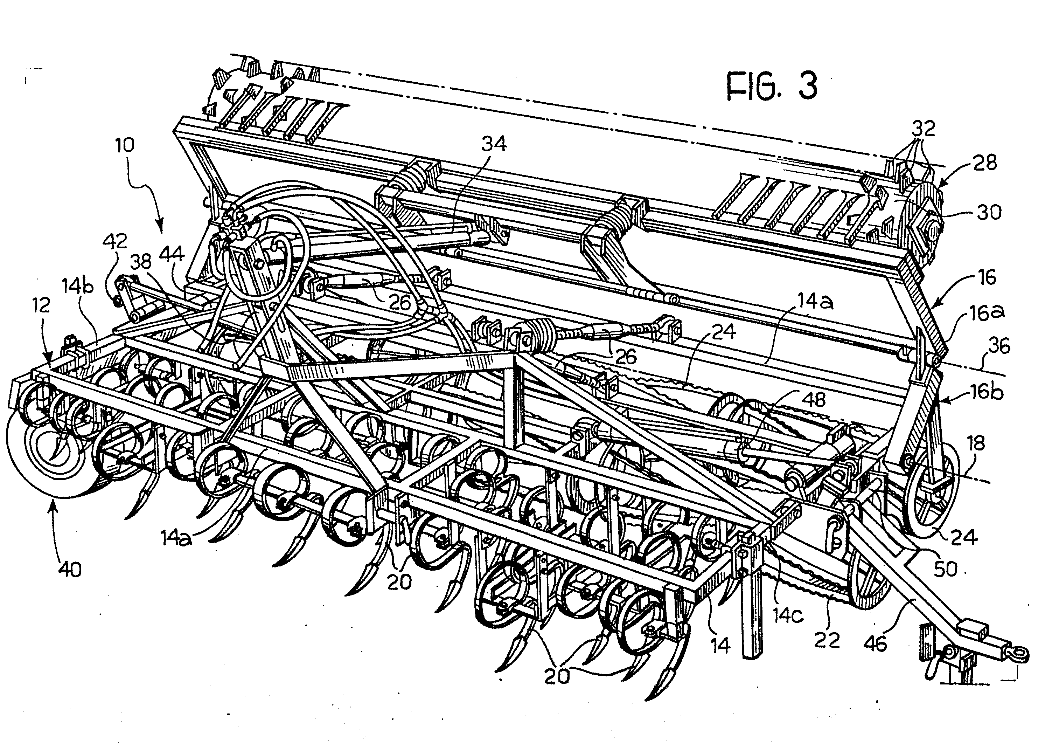

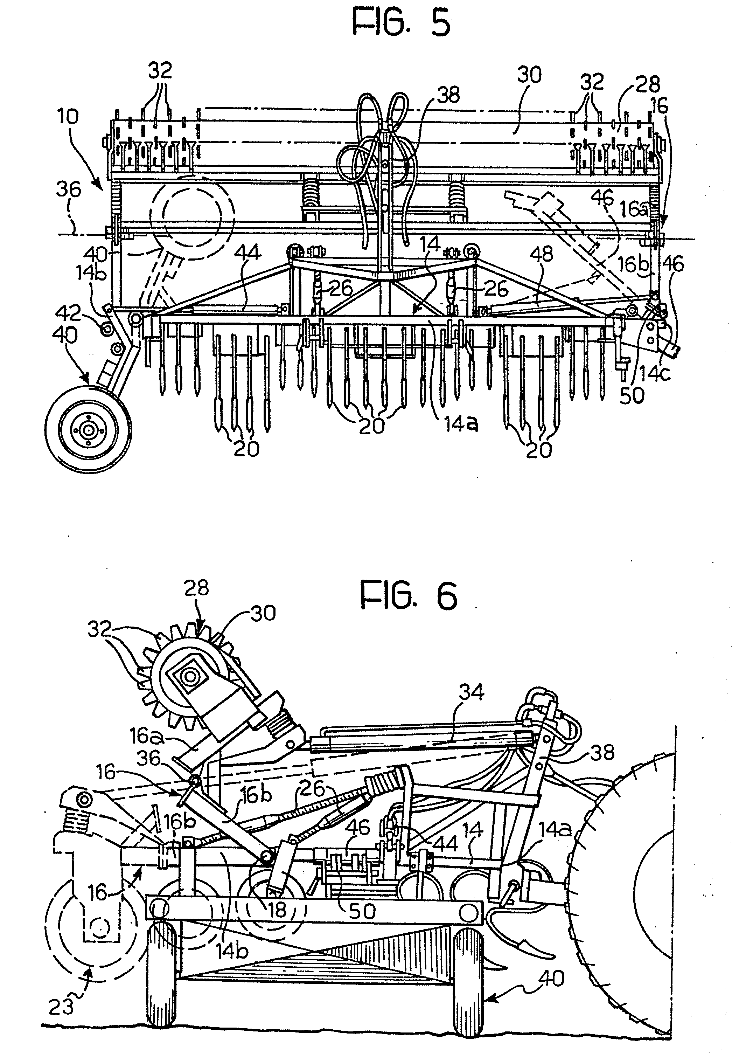

In the drawings, reference 10 indicates generally a composite harrow according to the invention, comprising a rectangular shaped frame 12 formed by tubular metal members and including, with reference to the direction of working advance of the harrow 10 illustrated in Figure 2, a front part 14 and a rear part 16. As is clearly illustrated in Figures 3 and 6, the rear part 16 is articulated to the front part 14 about an axis 18 parallel to the longer sides 14a of the front part 14.

To the front zone of the front part 14 there are attached a plurality of flexible vibratory tines 20 which project downwardly and have the function of effecting the tilling of fields intended for growing maize and other cereals, by means of a surface preparation of the sowing bed. The vibratory tines 20 are constituted by metal blades each having a curved resilient part 20a for attachment to the frame part 14 and a pointed working end 20b facing in the direction of working advance of the harrow 10. The conformation of the tines 20 ensures a high capacity for vibration together with considerable resistance to wear.

The vibratory tines 20 are disposed in rows parallel to the longer sides 14a of the frame part 14 and according to a particularly advantageous aspect of the invention the tines 20 located at the ends of each row are attached to the frame part 14 so as to be adjustable in height, in the manner clearly visible in Figure 4. This characteristic allows the level of the working ends 20b of the tines 20 to be varied during use according to the conformation of the ground and the weight of the tractor T to which the harrow 10 is attached. More particularly, since the adjustable tines 20 are located, in the working condition of the harrow 10 illustrated in Figure 2, in alignment with the wheels R of the tractor T, the lowering of the adjustable tines 20 into the position illustrated in Figure 5, that is, to a level lower than that of the remaining tines 20, allows any tracks left by the tractor T to be obliterated in depth.

Beneath the rear zone of the front frame part 14 there are attached two independent series of rotatable helical cage rollers, the front rollers being indicated 22 and the rear ones 24. The function of the rollers 22 and 24 is to break down the clods of earth and to level the ground after the harrowing action performed by the tines 20. Preferably the front rollers 22 have a greater diameter (for example of the order of 33 cms.) than that of the rollers 24 (normally of the order of 27 cms.) whereby these latter rotate at a higher speed.

The breaking rollers 22 and 24 are adjustable in height independently. The rollers 24 are also sprung by means of spring devices generally indicated 26.

Reference 28 shows a rear breaking roller rotatably attached to the rear frame part 16 and including a cylinder 30 carrying externally a plurality of rigid radial teeth 32 arranged in helical configurations. The function of the rear roller 28 is further to improve the preparation of the ground after the action of the front rollers 22 and intermediate rollers 24, rendering it perfectly flat and compact in order to ensure that sowing is absolutely effective. The rear roller 28 is also sprung and adjustable by means of an independent device, normally hydraulic, generally indicated 34. The device 34 also effects displacement of the rear frame part 16 which, as shown in Figures 3 and 6, is formed by an outer part 16a and an inner part 16b articulated together about an axis 36 parallel to the axis 18, between a lowered working position illustrated in Figure 2 and shown in broken outline in Figure 6 and a raised transport position illustrated in Figures 1, 3, 5 and shown in continuous outline in Figure 6. In the lowered position the rear roller 28 is active while in the raised position this roller 28 is inactive and in practice is located above the rollers 22 and 24.

An attachment device of conventional type, generally indicated 38, is located in correspondence with the longer front side 14a of the frame part 14 and its function is to connect the harrow 10 to a normal three-point towing attachment of the tractor T in the manner illustrated schematically in Figure 2, during operative use of the harrow itself.

According to the invention, the front frame part 14 has a two-wheeled carriage on one of its shorter sides 14b, the carriage being generally indicated 40, and the structure of which is articulated to the frame part 14 about an axis 42 parallel to the said shorter side 14b. A hydraulic jack 44 is arranged to effect displacement of the carriage 40 between a raised rest position illustrated in Figure 4 and shown in broken outline in Figure 5, in which the carriage 40 projects above the frame part 14, and a lowered transport position.

illustrated in Figures 1, 3 and 6 and shown in continuous outline in Figure 5, in which the carriage 40 projects below the frame part 14.

By 46 is shown a tow bar articulated to the other shorter side 14c of the frame part 14 and arranged to be connected in known manner to a towing hitch of the tractor T, in the manner illustrated in Figure 1. The two bar 46 is displaceable between a raised, rest position shown in broken outline in Figure 5, in which it projects above the frame part 14 and a lowered operative position, shown in Figure 3 and in continuous outline in Figure 5. The movement of the bar 46. between the two positions mentioned above is effected by means of a hydraulic jack 48 and a safety pin 50 is provided for locking the bar 46 in the lowered position.

The carriage 40 and the tow bar 46 are to advantage used for transferring the harrow 10 in a condition of minimum bulk towards and away from the place of work. Indeed, supposing one starts from the operative condition of the harrow illustrated in Figure 2, the change to the transport condition illustrated in Figure 1 is achieved simply by first raising the rear frame part 16 into the position illustrated in Figures 3, 5 and 6 and subsequently lowering the carriage 40 and the tow bar 46. At this point it suffices to disconnect the attachment device 38 from the three-point attachment of the tractor T and to connect the bar 46 to the towing hitch of the tractor itself. The harrow 10 may then easily be towed by the tractor T in a condition of minimum bulk.

Clearly the change from the transport condition of Figure 1 to the working condition of Figure 2 is achieved by carrying out the operations described above in reverse.

It is clear from the above that the harrow 10 according to the invention is able, in its operative condition, to achieve a better quality and higher capacity of working, at the same time ensuring easier, more convenient and secure transport in its transfer condition.

Comparison tests carried out by the Applicant in various conditions with harrows of conventional type have shown that on ground worked with the composite harrow according to the invention, the growth of the crop has been surprisingly improved, the crops have survived drought better and longer, the permeability of the ground has been improved and the harvest of maize and other cereals has been greater.

It should be noted that the composite harrow according to the invention may also be used to advantage after the harvesting of the grain to eliminate weeds and to harrow the remainder of the stubble.

Finally it is important to note the absence in the harrow according to the invention of any cardan transmission which could produce wear and problems both for the tractor and the implement.

## CLAIMS

1. Composite harrow comprising a framework carrying at its front end a plurality of flexible vibratory tines formed by metal blades having resilient curved portions connecting them to the frame, the tines being located in parallel arrays, and the frame carrying beneath it breaking rollers located parallel to the arrays of vibratory tines, the front part of the frame being provided with a device for attaching it to a tractor for the working advance of the harrow, characterised in that the breaking rollers comprise a plurality of front helical cage rollers (22), a plurality of intermediate helical cage rollers (24) and a rear roller (28) having rigid teeth (32) disposed in helical configurations.

2. Harrow according to Claim 1, characterised in that the front and intermediate breaking rollers (22, 24) and the rear roller (28) are independent of each other and independently adjustable.

3. Harrow according to Claim 1 or Claim 2, characterised in that the rear roller (28) is carried by a rear part (16) of the frame (12) articulated to the front part of the frame (12) about an axis (18) parallel to the rear roller (28) and in that actuator means (34) are provided for effecting movement of the rear frame part (16) between a working position in which the rear roller (28) is lowered and a raised transport position of the harrow (10).

4. Harrow according to one or more of the preceding claims, characterised in that the frame (12) has a carriage (40) on one side (14b) thereof and a tow bar (46) for coupling to a towing device of a tractor (T) on the opposite side (14c) thereof, the carriage (40) and the tow bar (46) being rotatable about respective axes perpendicular to the arrays of vibratory tines (20), and in that actuator means (44, 48) are provided for effecting displacement of the carriage (40) and of the tow bar (46) about respective axes between a raised working position of the harrow (10) and a lowered transport position of the harrow (10).

5. Harrow according to Claim 4, characterised in that the actuator means are constituted by hydraulic jacks (44, 48).

6. Harrow according to any one of Claims 1 to 5, characterised in that the vibratory tines (20) of each array which are aligned with the wheels (R) of the tractor (T) in use are adjustable in height, so as to project downwardly further than the remaining vibratory tines (20).

0108727

1/3

## FIG. 1

## FIG. 2

## FIG. 4

FIG. 3

0108727

# FIG. 5

# FIG. 6

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-2 007 071 (L. BIASOTTO) <br> * Page 2, line 1 - page 3, line 64; figure 1c * | 1-3 | A 01 B 35/18 |
| | --- | | |
| A | DE-U-1 989 608 (FA. M. FRICK) <br> * Page 1, line 14 - page 2, line 17; page 3, line 10 - page 5, line 3; figure 1 * | 1,2 | |
| | ----- | | |

TECHNICAL FIELDS SEARCHED (Int. Cl. ³)

A 01 B 35/00

The present search report has been drawn up for all claims

| Place of search | Date of completion of the search | Examiner |
|---|---|---|
| BERLIN | 28-12-1983 | BERGZOLL M C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82